(19) Europäisches Patentamt
European Patent Office
Office européen des brevets

(11) Publication number: **0 272 012 B1**

(12) # EUROPEAN PATENT SPECIFICATION

(45) Date of publication of patent specification: **19.08.92**

(51) Int. Cl.[5]: **C08F 8/12**, C08F 216/06, //C08F216:06

(21) Application number: **87310446.7**

(22) Date of filing: **26.11.87**

(54) **Polymers, their production and uses.**

(30) Priority: **27.11.86 GB 8628390**
**02.09.87 GB 8720602**

(43) Date of publication of application:
**22.06.88 Bulletin 88/25**

(45) Publication of the grant of the patent:
**19.08.92 Bulletin 92/34**

(84) Designated Contracting States:
**BE DE ES FR GB IT NL SE**

(56) References cited:
**EP-A- 0 199 358**
**FR-A- 1 570 974**

(73) Proprietor: **ALLIED COLLOIDS LIMITED**
**P.O. Box 38 Low Moor**
**Bradford West Yorkshire, BD12 0JZ(GB)**

(72) Inventor: **Flesher, Peter**
**"Littlebeck" Beck Lane**
**Bingley West Yorkshire(GB)**
Inventor: **Farrar, David**
**13 Greenfield Lane**
**Idle Bradford West Yorkshire(GB)**

(74) Representative: **Lawrence, Peter Robin Broughton et al**
**GILL JENNINGS & EVERY 53-64 Chancery Lane**
**London WC2A 1HN(GB)**

**EP 0 272 012 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to polyvinyl alcohols, their production, and their use in moulding compositions and, especially in aqueous thickening and sizing compositions.

Polyvinyl alcohol is a water soluble polymer that is made by hydrolysis of polyvinyl acetate. Despite the very wide usage of polyvinyl alcohol, there is general acceptance that it is not easily possible to alter its properties widely by simple variations in the monomer feed.

Attempts to modify the properties of polyvinyl alcohol by copolymerisation with a second monomer are well known but a difficulty is that the second monomer must be resistant to the hydrolysis conditions by which the vinyl alcohol is generated from the vinyl acetate or other monomer that is used for making the initial polymer. For instance typical ester monomers would be hydrolysed during the hydrolysis of the vinyl acetate groups.

Copolymers of vinyl acetate with allyl acetate have not proved very successful. Some copolymerisations of vinyl acetate, e.g., with vinyl versatate, are performed so as to reduce the degree of hydrolysis to polyvinyl alcohol.

One major use of polyvinyl alcohol is as an aqueous thickener or size and for these purposes the polymer must be highly hydrolysed and substantially or fully soluble in water. Other uses of vinyl alcohol polymers rely upon the polymer's film-forming capacities, e.g., from emulsions of partially soluble or insoluble polymer, and upon the properties of shaped articles formed from the polymer, e.g., by moulding, extrusion or casting.

A problem with polyvinyl alcohol aqueous compositions is that their rheology and viscosity properties are only achieved by the use of rather large amounts of polyvinyl alcohol. A problem with films and other shaped articles of polyvinyl alcohol is that they tend to be rather brittle unless plasticiser is present. Normal plasticisers are external plasticisers and a problem with these is that they are liable to migrate during or after formation of the film or article, as a result of which the flexibility may be different from what is intended.

It is known that the thickening properties of certain acrylic polymers can be improved by including pendant hydrophobic groups in the polymer, the improvement apparently being due to association between the hydrophobic groups in adjacent molecules. The polymers containing such groups are often referred to as associative thickeners.

GB 1,167,524 describes copolymers of at least one ethylenically unsaturated monomer with a comonomer that is, for instance, an acrylic ester or an allyl ether of a polyalkoxylated alcohol that may be aliphatic or aromatic. This polyalkoxylated alcohol thus provides the pendant hydrophobic groups. Particular allyl ethers of this general type, and copolymers formed from them, are also described in GB 1,273,552.

The comonomer with the ether or ester is said to be acrylic acid, acrylamide, vinyl pyrollidone or maleic anhydride or a blend of maleic anhydride with a compound which normally copolymerises in alternating sequence. The comonomers that are exemplified are acrylic acid, maleic anhydride, acrylamide and blends of maleic anhydride with methyl vinyl ether or with vinyl acetate or with styrene. In particular a water soluble copolymer of maleic anhydride, vinyl acetate and the allyl ether of ethoxylated lanolin is described in example 9 of GB 1,273,552 and a copolymer of maleic anhydride, vinyl acetate and polyethylene glycol monoallyl monocetyl ether is described in example 9 of GB 1,167,524.

The incorporation of the maleic anhydride in such copolymers will have a significant effect on the properties of them. For instance maleic anhydride depresses molecular weight. Also, the use of allyl ethers is consistent with the intention to obtain a low molecular weight as it is well known that allyl monomers tend to give copolymers of much lower molecular weight than acrylic or other vinyl monomers.

The products of those patents were mentioned as thickeners or for various other purposes but they have not proved commercially very successful. The commercial success of associative thickeners has been restricted primarily to polymers made by oil-in-water copolymerisation of, for instance, an ester formed between an unsaturated acid and a hydrocarbyl ether of a polyalkylene glycol with ethyl acrylate or other water insoluble monomer with methacrylic acid or other alkali soluble monomer. A typical disclosure is in EP 11806.

In U.S 4,618,648 and EP 199358 it is alleged that shaped articles are formed from a copolymer of vinyl alcohol units with acrylic ester units carrying a pendant hydrophobic group. The polymers are alleged to be made by hydrolysis of a polymer of the corresponding vinyl acetate and acrylic ester groups. The hydrophobic ester groups are alleged to be included for the purpose of plasticising the resultant shaped article.

We have confirmed that the shaped article is more plasticised if the polymer composition from which it is formed is made by hydrolysis of a copolymer of vinyl acetate units with the hydrophobic acrylic ester

groups than from a homopolymer of the vinyl acetate units. However we have observed that the plasticising effect depends upon whether or not the hydrolysed polymer has been subjected to a purification stage and this proves that the effective hydrophobic moieties are not chemically attached to the polymer. It is clear that during the hydrolysis of the vinyl acetate units the hydrophobic acrylic ester units are also hydrolysed to form acrylic acid units in the polymer backbone and free surfactant alcohol molecules. The final product is a blend of a copolymer of vinyl alcohol with the hydrolysed acid units in physical admixture with an external plasticiser that is the hydrolysis product of the ester units, generally a surfactant alcohol. Thus, contrary to what is stated in U.S. 4,618,648, the vinyl alcohol polymer does not contain an effective amount of the hydrophobic vinyl ester units.

This invention relates to novel copolymers, and products containing them, formed of

(a) 10 to 99% by weight recurring vinyl units in the polymer backbone and selected from vinyl alcohol and vinyl acylate units, at least 25 mole percent being vinyl alcohol units,

(b) 0 to 50% by weight recurring vinyl units in the polymer backbone and derived from other ethylenically unsaturated copolymerisable monomer and

(c) 1 to 90% by weight recurring allyl ether units in the polymer backbone and derived from monomer having the formula $CH_2=CR'CH_2OB_nR$ wherein R' is H or methyl B is ethyleneoxy, n is an integer of at least 2, and R is a hydrophobic group containing at least 8 carbon atoms.

Thus, in the invention the vinyl alcohol polymer backbone does contain a substantial and effective amount of the hydrophobic units (c), in contrast to the polymers of U.S 4,618,648.

Throughout this specification all percentages are by weight unless otherwise specified.

In this specification the acylate of vinyl acylate is the residue of a carboxylic acid which usually does not itself contain polymerisable ethylenically unsaturated groups.

By the invention it is possible to provide both polyvinyl alcohol polymers that give improved viscosifying properties in aqueous compositions, and polyvinyl alcohol polymers that give improved physical properties in films and moulded articles even after prolonged exposure to water.

In one preferred aspect of the invention a copolymer as defined above is substantially free of hydrolysis products derived from unit (c). In particular the product is generally substantially free of surfactant alcohol, although small amounts may be present as a result of having been present during initial manufacture of the polyvinyl acetate from monomer contaminated with the surfactant alcohol.

By using allyl ether units, in preference to acrylic ester units, for component (c) it is much easier to hydrolyse the polyvinyl acetate copolymer to a polyvinyl alcohol copolymer without hydrolysing the units (c).

In another aspect of the invention we provide an aqueous composition comprising a copolymer as defined above. The composition is preferably for use as a thickener or size. The composition is preferably free of hydrolysis products derived from unit (c) and unit (c) is preferably an allyl ether monomer. The composition may include a mixture of the novel polyvinyl alcohol and conventional polyvinyl alcohol.

Thus in one important aspect of the invention we provide novel aqueous compositions that are essentially polyvinyl alcohol thickeners or sizes but that are modified by the inclusion, within some or all of the polyvinyl alcohol chains, of unit (c), preferably allyl ether units (c). In such copolymers, the mole percent of the units (a) that are vinyl alcohol units is selected to ensure that the copolymer is soluble. Generally the amount is above 50% and usually at least 70 or 75%, preferably at least 85 or 90 mole percent.

Another important product according to the invention is a shaped article, or a film-forming composition, formed of the defined copolymer and that is preferably substantially free of external plasticiser. In such copolymers the proportion of vinyl alcohol units is sufficiently low that the product is shapable, and generally such that it is insoluble. Accordingly the amount is usually below 75%, typically about 25 to 70, preferably above 50, mole percent.

In another aspect of the invention a copolymer as defined above is formed by hydrolysis of the corresponding vinyl acylate copolymer by hydrolysis under conditions that do not hydrolyse units (c). The hydrolysis conditions can be conventional for vinyl acetate hydrolysis, but if the units (c) had been acrylic ester units the hydrolysis conditions would have needed to be more gentle than usual.

Preferably n is at least 5 and most preferably at least 10 with best results generally being obtained when it is 10 or more, e.g., up to 20 or 50 or even 100. However lower values of n, e.g., down to 2, are sometimes satisfactory, especially when water solubility is unimportant or undesirable, for instance in film forming or moulding compositions.

The polyoxyethylene chain may be interrupted by oxypropylene groups. The properties of the final polymer can be controlled by appropriate selection of n and R.

R can be a polyoxyalkylene chain where the alkylene groups wholly or mainly are propylene or higher but preferably is a hydrocarbyl group. The hydrocarbyl group generally contains from 8 to 30, preferably 10

to 24 and most preferably 12 to 18 carbon atoms. It may be selected from alkyl, for instance octyl, lauryl or stearyl, aralkyl such as 2-phenyl-ethyl ($-C_2H_4Ph$), aryl such as naphthyl, alkaryl such as alkyl phenyl wherein the alkyl group generally contains 6 to 12 carbon atoms, cycloalkyl (including polycyclic alkyl groups), or mixtures of one or more such groups. Preferred hydrocarbyl groups are alkyl and alkaryl groups. Any of these groups may additionally be substituted provided the substituents do not render the pendant group hydrophilic to an extent that the desired improvement in properties due to the hydrophobic group is lost.

The ethylenically unsaturated monomer (c) has the formula $CH_2=CR'CH_2OB_nR$ where R' is hydrogen or methyl. Flocculant polymers containing such units have been described by us in EP 0172723 and further polymers containing such units, and the synthesis of such units, are described in EP 0216479 and EP 0213800, both of which were unpublished at the priority date of this application.

The polymer is generally free of units (b) although such units can be included either as diluents or to impart a desired property modification. The copolymerisable monomer, if present, is normally an ethylenically unsaturated monomer. It can be an allyl monomer, for instance allyl alcohol that is present in the polymer as a result of hydrolysis of a polymer containing allyl acetate, but is generally a vinyl monomer. Vinyl monomers that depress molecular weight, eg. maleic anhydride, are generally undesirable and so any comonomer (b) is preferably an acrylic monomer that can copolymerise with monomer (c) and vinyl acetate or other precursor units for (a) and that will resist the hydrolysis conditions. Typical examples include (meth) acrylic acid, butyl methacrylate and allyl sulphonate.

The units (a) will consist solely of vinyl alcohol units if hydrolysis of the vinyl acylate units that were initially copolymerised has been taken to completion. Otherwise some of the vinyl acylate units, eg. 5 to 30 mole percent, will remain in the final polymer, the other units having been hydrolysed to vinyl alcohol.

Vinyl acylate units that may be copolymerised with the monomer to provide units (a) can be any of the vinyl acylate units that are known to be suitable for polymerisation and subsequent hydrolysis to make polyvinyl alcohol. Thus they can be selected from vinyl esters of optionally substituted aromatic carboxylic acids and optionally substituted alkanoic acid, for instance vinyl formate, benzoate, chloroacetate, dichloroacetate, bromoacetate and trifluoroacetate but preferably vinyl acetate is used as the monomer.

The relative amounts of monomers (a),(b) and (c) will be selected having regard to the desired properties. The amount of monomer (b) is generally zero or preferably, less than 20 per cent by weight. The amount of monomer (c) is typically 3 to 50 per cent by weight, often 5 to 30 per cent by weight. The balance is monomer (a). If unit (b) is present, preferably substantially all of it was present in the starting vinyl acylate polymer. Thus preferably substantially none of unit (b) is formed by hydrolysis of units (c) during the hydrolysis of the vinyl acylate groups. Preferably the polymer is free of any unit (b) that could have been formed by hydrolysis of units (c). When these units are acrylic ester, preferably the polymer is free of acrylic acid units.

The copolymerisation of vinyl acylate units with the other monomers may be conducted by any of the techniques known for the production of polyvinyl acetate and include bulk, suspension, solution and emulsion polymerisation.

The resulting polymer may then be converted to the polyvinyl alcohol by acidic hydrolysis, basic hydrolysis or methanolysis. The conversion can be conducted in any conventional manner that does not cause hydrolysis of units (c). Naturally the hydrolysis conditions must be selected such that the units (c) are not hydrolysed. Conventional hydrolysis conditions include reaction with aqueous alkali, aqueous alkali in methanol, aqueous alkali in acetone, or alkali in methanol, or by reaction with aqueous acid or acid in methanol. The polymer may be hydrolysed while in solution or suspension. The alkali is usually sodium hydroxide but may be ammonia or an amine. Hydrolysis may be effected at temperatures of 10 to 180 °C, generally 20 to 100°C (optionally under elevated or reduced pressure) for a reaction time that is sufficient to give the desired degree of hydrolysis.

It is surprising that it is possible to conduct hydrolysis without hydrolysing the pendant group. The use of the allyl ether groups as monomer (c) is particularly advantageous as a result of their high resistance to hydrolysis.

The risk of hydrolysis of units (c), can be eliminated or reduced by selection of appropriate hydrolysis, e.g., controlled acidic or methanolic hydrolysis.

If the particular vinyl acylate units in the starting polymer necessitate the use of hydrolysis conditions under which the units (c) are prone to hydrolyse, then it is desirable to use a more easily hydrolysable vinyl acylate. The use of vinyl formate groups in preferance to vinyl acetate or other groups can be very suitable as these groups are very easily hydrolysed in water.

The polymer is generally linear but it can be cross-linked either while it is still in the form of an emulsion or solution or after it has been shaped into a film, coating or fibre. Cross-linking can be caused by

reaction through the hydroxyl groups, eg. by reaction with glyoxal after hydrolysis or a polyethylenically unsaturated monomer may be used in a small amount, eg. 10 to 1000 ppm, as part or all of monomer (b).

When the novel polymer is to be used for forming shaped articles (e.g., when it is to be provided as a film-forming composition) the polymer may be formulated in an insoluble or partially insoluble form, as a result of having a rather low degree (e.g., below 70%) of hydrolysis of units (a) and/or as a result of having a rather low value of n or a rather high percentage of units (c). Aqueous compositions of such polymers may be in the form of emulsions in water. The polymer generally has a molecular weight up to 5 million, typically up to 3 million. The polymer can be formulated in the same manner as conventional polyvinyl alcohols are formulated for film-formation or other production of shaped articles. Blends with conventional polyvinyl alcohols can be used, and the shapable compositions can include other components, for instance plasticisers and other property modifiers. If there is any additional plasticiser, preferably it is substantially free of surfactant alcohol of the type obtainable by hydrolysis of units (c). The polymer may be shaped into films, coatings, fibres or any other shaped articles in conventional manner.

Preferred compositions of the invention are aqueous compositions in which the polymer is partially or, preferably, wholly soluble in water. Preferred compositions are sizing compositions and aqueous thickeners. The rheology characteristics of such compositions can, as a result of the inclusion of units (c), be very greatly improved compared to conventional polyvinyl alcohol compositions. Indeed the improvement in viscosity may be so great that the amount of polymer required can be much less than conventional. Instead of or in addition to reducing the amount of polymer it can be desirable to blend the novel polymer with conventional polyvinyl alcohol (or starch or other conventional natural or synthetic polymer), the amount of novel polymer typically being 5 to 90%, often 20 to 60%, by weight of the blend of novel and conventional polyvinyl alcohol.

When the composition is intended primarily as a thickener the molecular weight is often up to 3 million, 5 million or even higher. It is generally at least 100,000, preferably at least 1 million. When the composition is to be used as a size then lower molecular weights may be appropriate, but usually the molecular weight is above 1,000.

The aqueous compositions can be formulated in conventional manner using conventional additives. The concentration of the novel polyvinyl alcohols in any compositions containing them is generally at least 0.1% and is usually below 20%, typically up to about 10 or 15%, when the composition is an aqueous composition.

The polymers can be used whereever polyvinyl alcohol is used at present and, especially, in those uses where a higher viscosity would be desirable. Suitable uses are sizes for textiles, aqueous adhesives, eg. for paper, wood, or fabrics, aqueous viscosifiers eg. for aqueous paints and other water based systems including aqueous down hole liquids, transfer additives and release agents, and in the production of plasticised films and fibres.

The following are examples.

Example 1

A vessel containing 100g water, 1g surfactant, 6g hydroxyethyl cellulose and 0.3g ammonium persulphate was degassed with nitrogen for 30 minutes and heated to 70°C. 200g vinyl acetate was gradually blended with 200g water, 0.6g ammonium persulphate and 2g surfactant and added over 3 hours via a predisperser to the vessel. A further 0.1g ammonium persulphate was then added and the vessel was held at 70°C for a further hour. The resultant emulsion was cooled and filtered to give a 40° solids emulsion.

The emulsion was then dried in an oven at 70°C for 24 hours and 200g of the resultant polyvinyl acetate solids were dissolved in a blend of 300g acetone, 50g methanol, 25g water and 20g concentrated hydrochloric acid and allowed to stand for three days. The product turned solid and was soluble in water, thus indicating hydrolysis to polyvinyl alchohol. A 5 per cent solution was prepared and had a viscosity, measured on a Brookfield RVT viscometer spindle 3, 10 rpm, of 150 mPas [150 cPs].

When the process was repeated replacing the 200g vinyl acetate with 180g vinyl acetate and 20g of the ether formed between allyl alcohol and stearyl alcohol 10-ethoxylate the viscosity was 1750 mPas [1750 cPs].

Example 2

A range of vinyl acetate (co)polymers was prepared according to the following general procedure.

Stage 1: Polymer preparation

A reaction vessel fitted with a stirrer, thermometer condenser and nitrogen bubbler was placed in a water bath thermostated at 70 ° C. Then 390g t-butanol was added and degassed for 10 minutes with $N_2$. A monomer feed comprising 2.0g AZDN dissolved in 36g vinyl acetate was pumped into the reaction vessel over a period of 5 minutes. After the initial feed had been added the contents of the vessel were allowed to react for a period of 10 minutes. After this a monomer feed comprising 2.0g AZDN dissolved in 364g vinyl acetate alone or blended with second monomer, 200g t-butanol was added to the reaction vessel over a period of 165 minutes. After completion of the monomer feed, the reaction mix was held at 70 ° C for 15 minutes and then 0.5g AZDN dissolved in 10g t-butanol was added, with the temperature being maintained at 70 ° C for a further 45 minutes after which the solution was cooled to leave a 40% active polymer in t-butanol.

Stage 2: Polymer hydrolysis

1000g of polymer solution prepared according to the procedure in Stage 1 was stirred into 1000g methanol using a Silverson mixer. To this solution was then added 4.0g NaOH dissolved in 80g methanol. Agitation was continued until the onset of gellation/phase separation, when the stirrer was removed. After being left to stand for a further 15 minutes the gel was comminuted into 1000g methanol containing 10.0g concentrated HCl using a Silverson mixer fitted with a high shear head. This produced a fine particle size slurry of the polymer in methanol/butanol which was then filtered and vacuum dried to leave a pale yellow glassy solid.

The degree of hydrolysis for the polymer was determined according to the method given in "Polyvinyl alcohol: Properties and Applications" ed C.A.Finch p.565/566.

Some of these products were used unwashed, that is the product was dissolved into water to form a viscous solution which was cast into a film to allow its extension at break to be determined. Other products were washed. These were made by dissolving the "unwashed" products from their powder form into water. The polymeric component was then isolated by adding acetone until a precipitate was observed. This was then recovered by vacuum filtration. In this way, any unpolymerised surfactant monomer, or any surfactant group which had been cleaved from the polymer backbone during hydrolysis, could be separated from the base polymer. The free surfactant remains soluble in the water/acetone continuous phase. They were then tested as before.

In the tables below allyl indicates the monomer $C_{18}H_{37}(EO)_{20}$-O-$CH_2CH=CH_2$ while acrylic indicates the monomer

$$C_{18}H_{37}(EO)_{20}\text{-O-}\underset{\displaystyle O}{C}\text{-CH=CH}_2.$$

EO is -O-$CH_2CH_2$-.
The results are as follows.

**Table 1**

| Monomer c | Washed | Extension at Break |
|---|---|---|
| 10% allyl | no | 180 |
| 10% allyl | yes | 201 |
| 10% acrylic | no | 278 |
| 10% acrylic | yes | 95 |

It is apparent that the allyl ether product gives a film whose extension at break is substantially unchanged by washing, this confirming that there is no external plasticiser. The acrylic product however gives a film whose extension at break decreases significantly on washing. This shows that the polymer does not contain the $C_{18}$ units chemically bonded into it. Instead the polymer is merely physically blended with the corresponding surfactant alcohol, which thus serves as external plasticiser.

Some of the products produced as above were dissolved in water and the viscosity of a 5% solution was tested. The results are shown in Table 2.

**Table 2**

| Monomer c | Washed | Viscosity 5% conc mPas |
|---|---|---|
| absent | no | 23 |
| 10% allyl | no | 17500 |
| 10% acrylic | no | 24 |
| 10% acrylic | yes | 27 |

The results show that the acrylic product, both washed and unwashed, has a viscosity of the same order as that of the vinyl alcohol polymer free of monomer (c). This indicates that there are no side chains in the polymer to give an associative thickening effect. In contrast, the allyl product has clear associative thickening properties.

**Claims**

**1.** A polymer formed of
(a) 10 to 99% by weight recurring vinyl units in the polymer backbone and selected from vinyl alcohol and vinyl acylate units, at least 25 mole percent being vinyl alcohol units,
(b) 0 to 50% by weight recurring vinyl units in the polymer backbone and derived from other ethylenically unsaturated copolymerisable monomer,
characterised in that the polymer is also formed of
(c) 1 to 90% by weight recurring allyl ether units in the polymer backbone and derived from a monomer of the formula $CH_2=CR'CH_2OB_nR$ wherein R' is H or methyl, B is ethyleneoxy, n is an integer of at least 2, and R is a hydrophobic group containing at least 8 carbon atoms.

**2.** A polymer according to claim 1 in which R is a hydrocarbyl group.

**3.** A polymer according to claim 1 or claim 2 substantially free of hydrolysis products derived from units (c).

**4.** A polymer according to any preceding claim and which is substantially free of any unit (b) obtainable by hydrolysis of units (c).

**5.** A polymer according to any preceding claim in which at least 50 mole percent of the units (a) are vinyl alcohol units.

**6.** A polymer according to claim 5 that is water soluble and in which at least 70% of the units (a) are vinyl alcohol units and n is at least 5.

**7.** A polymer according to any preceding claim in which R is selected from alkyl, aralkyl, alkaryl and cycloalkyl.

8. An aqueous polyvinyl alcohol composition characterised in that the polyvinyl alcohol is a polymer according to any of claims 1 to 7.

9. An aqueous composition according to claim 8 in which the said polymer is water soluble, and at least 70% of the units (a) are vinyl alcohol units and in which n is at least 5.

10. An aqueous composition according to claim 8 also comprising a polyvinyl alcohol free of units (c).

11. An aqueous composition according to claim 8 and which is a sizing composition or a thickening composition.

12. A shaped article formed from a polyvinyl alcohol characterised in that the polyvinyl alcohol is a polymer according to any of claims 1 to 7.

13. An article according to claim 12 that is substantially free of hydrolysis products derived from units (c).

14. A process of making a polymer according to claim 1 by hydrolysis of a polymer of vinyl acylate units and units (b) and (c), characterised in that the hydrolysis of the vinyl acylate units is conducted under conditions that do not result in hydrolysis of units (c).

**Patentansprüche**

1. Polymer gebildet aus
(a) 10 bis 99 Gew.% wiederkehrenden Vinyleinheiten in der Polymer-Hauptkette und ausgewählt aus Vinylalkohol- und Vinylacylat-Einheiten, wobei wenigstens 25 Mol-% Vinylalkohol-Einheiten sind,
(b) 0 bis 50 Gew.% wiederkehrenden Vinyl-Einheiten in der Polymer-Hauptkette und abgeleitet von einem anderen ethylenisch ungesättigten co-polymerisierbaren Monomeren,
dadurch gekennzeichnet, daß das Polymer auch gebildet wird
(c)aus 1 bis 90 Gew.% wiederkehrenden Allyläther-Einheiten in der Polymer-Hauptkette und abgeleitet von einem Monomeren der Formel

$CH_2 = CR'CH_3OB_nR$

worin

R' = Wasserstoff oder Methyl
B = Äthylenoxy
n = eine ganze Zahl von mindestens 2 und
R = eine hydrophobe Gruppe mit wenigstens 8 Kohlenstoffatomen

ist.

2. Polymer nach Anspruch 1, worin R eine Hydrocarbyl-Gruppe ist.

3. Polymer nach Anspruch 1 oder 2, das im wesentlichen frei von Hydrolyse-Produkten ist, die sich von den Einheiten (c) ableiten.

4. Polymer nach einem vorherigen Anspruch, welches im wesentlichen frei von jeglichen Einheiten (b) ist, die durch Hydrolyse von Einheiten (c) erhalten werden können.

5. Polymer nach einem vorherigen Anspruch, worin wenigstens 50 Mol-% der Einheiten (a) Vinylalkohol-Einheiten sind.

6. Polymer nach Anspruch 5, welches wasserlöslich ist und in welchem mindestens 70 % der Einheiten (a) Vinylalkohol-Einheiten sind und n = mindestens 5 ist.

7. Polymer nach einem vorherigen Anspruch, worin R ausgewählt wurde aus: Alkyl, Aralkyl, Alkaryl und Cycloalkyl.

8. Wässrige Polyvinylalkohol-Zusammensetzung, dadurch gekennzeichnet, daß der Polyvinylalkohol ein

Polymer nach einem der Ansprüche 1 bis 7 ist.

**9.** Wässrige Zusammensetzung nach Anspruch 8, worin das genannte Polymer wasserlöslich ist und mindestens 70 % der Einheiten (a) Vinylalkohol-Einheiten sind und worin n = mindestens 5 ist.

**10.** Wässrige Zusammensetzung nach Anspruch 8, welche auch einen Polyvinylalkohol ohne Einheiten (c) umfaßt.

**11.** Wässrige Zusammensetzung nach Anspruch 8, welche eine Schlicht- bzw. Leimzusammensetzung oder ein Verdickungsmittel ist.

**12.** Formkörper gebildet aus einem Polyvinylalkohol, dadurch gekennzeichnet, daß der Polyvinylalkohol ein Polymer nach einem der Ansprüche 1 bis 7 ist.

**13.** Körper nach Anspruch 12, welcher im wesentlichen frei von Hydrolyseprodukten ist, die sich von Einheiten (c) ableiten.

**14.** Verfahren zur Herstellung eines Polymers nach Anspruch 1 durch Hydrolyse eines Polymers aus Vinylacylat-Einheiten und Einheiten (b) und (c), dadurch gekennzeichnet, daß die Hydrolyse der Vinylacylat-Einheiten unter Bedingungen erfolgt, die keine Hydrolyse der Einheiten (c) zur Folge haben.

**Revendications**

**1.** Polymère formé de

(a) 10 à 99 % en poids de motifs vinyliques récurrents dans le squelette du polymère et choisis parmi les motifs alcool vinylique et acylate de vinyle, au moins 25 % en moles étant des motifs alcool vinylique,

(b) 0 à 50 % en poids de motifs vinyliques récurrents dans le squelette du polymère et dérivés d'un autre monomère copolymérisable à insaturation éthylénique,

caractérisé en ce que le polymère est aussi formé de

(c) 1 à 90 % en poids de motifs éther d'allyle récurrents dans le squelette du polymère et dérivés d'un monomère de formule $CH_2 = CR'CH_3OB_nR$ où R' est H ou méthyle, B est éthylèneoxy, n est un entier au moins égal à 2 et R est un groupe hydrophobe contenant au moins 8 atomes de carbone.

**2.** Polymère selon la revendication 1 dans lequel R est un groupe hydrocarbyle.

**3.** Polymère selon la revendication 1 ou la revendication 2 essentiellement exempt de produits d'hydrolyse dérivés des motifs (c).

**4.** Polymère selon l'une quelconque des revendications précédentes, et qui est essentiellement exempt de motifs (b) susceptibles d'être obtenus par hydrolyse des motifs (c).

**5.** Polymère selon l'une quelconque des revendications précédentes, dans lequel au moins 50 % en moles des motifs (a) sont des motifs alcool vinylique.

**6.** Polymère selon la revendication 5, qui est soluble dans l'eau et dans lequel au moins 70 % des motifs (a) sont des motifs alcool vinylique et n est au moins égal à 5.

**7.** Polymère selon l'une quelconque des revendications précédentes, dans lequel R est choisi parmi alkyle, aralkyle, alkaryle et cycloalkyle.

**8.** Composition d'alcool polyvinylique aqueuse, caractérisée en ce que l'alcool polyvinylique est un polymère selon l'une quelconque des revendications 1 à 7.

**9.** Composition aqueuse selon la revendication 8, dans laquelle ledit polymère est soluble dans l'eau, et au moins 70 % des motifs (a) sont des motifs alcool vinylique et dans lequel n est au moins égal à 5.

**10.** Composition aqueuse selon la revendication 8, comprenant également un alcool polyvinylique ne

contenant pas de motifs (c).

**11.** Composition aqueuse selon la revendication 8, et qui est une composition d'apprêtage ou une composition épaississante.

**12.** Article façonné formé à partir d'un alcool polyvinylique, caractérisé en ce que l'alcool polyvinylique est un polymère selon l'une quelconque des revendications 1 à 7.

**13.** Article selon la revendication 12, qui est essentiellement exempt de produits d'hydrolyse dérivés des motifs (c).

**14.** Procédé de préparation d'un polymère selon la revendication 1 par hydrolyse d'un polymère de motifs acylate de vinyle et de motifs (b) et (c), caractérisé en ce que l'hydrolyse des motifs acylate de vinyle est effectuée dans des conditions qui n'entraînent pas l'hydrolyse des motifs (c).